# FASCICULE DE BREVET EUROPEEN

(11) **EP 1 990 294 B1**
(45) Date de publication et mention de la délivrance du brevet: **18.11.2009**
(21) Numéro de dépôt: 08008806.5
(22) Date de dépôt: 12.05.2008
(51) Int. Cl.: B65G 47/80

(54) **Module de virage pour convoyeur à bande.**
Kurvenmodul für Bandförderer
Turning module for a conveyor belt.

(30) Priorité: 11.05.2007 FR 0703438
(43) Date de publication de la demande: 12.11.2008
(73) Titulaire: Hager-Electro SAS, 67210 Obernai (FR)
(72) Inventeur: Foesser, Matthieu, 67210 Obernai (FR)
(74) Mandataire: Littolff, Denis

(56) Documents cités:
- CH-A- 75 515
- DE-A1- 2 438 181
- DE-B- 1 278 939

## Description

La présente invention a trait à un module de virage pour convoyeur à bandes transporteuses comportant une bande d'entrée véhiculant des produits selon une première direction et une bande transporteuse de sortie véhiculant lesdits produits selon une seconde direction,

DE 2438181 décrit un module de virage selon le préambule de la revendication 1.

Les systèmes convoyeurs à bandes utilisés pour le déplacement de produits au travers de plusieurs zones de travail ou de manutention doivent en effet le plus souvent assurer des virages pour aller d'une zone à l'autre. Dans la plupart des cas, il s'agit de virages à angle compris entre 90° et 180°. Dans la pratique, la plupart des convoyeurs sont composés de maillons articulés les uns aux autres. Dans cette hypothèse, les systèmes de virage nécessitent un rayon de courbure important, qui est en réalité donné par le type de maillon utilisé.

Ces systèmes à maillons articulés présentent un certain nombre d'inconvénients :
- par construction, ces maillons présentent un agencement relatif qui génère un risque de coincement des doigts dans les portions courbes, suivant la taille des maillons utilisés ;
- la vitesse de déplacement des produits reste la même avant et après le virage ;
- lorsque le convoyeur est composé de bandes sans fin adjacentes, ces systèmes ont pour effet de retourner le produit par rapport au sens d'avancement lors d'un demi-tour, ou lui font effectuer un quart de tour lors des virages à 90°. Dans les deux cas, il est nécessaire d'utiliser des systèmes additionnels permettant d'éviter les retournements, qui impliquent des composants intermédiaires coûteux.

La présente invention permet de remédier à ces inconvénients. A cet effet, le module de virage de l'invention se caractérise à titre principal en ce qu'il est constitué :
- d'un disque rotatif glissé sous la bande d'entrée et surplombant la bande de sortie, ledit disque étant muni d'une rive extérieure fixe et d'une rive intérieure entraînée à la vitesse de rotation du disque, lesdites rives délimitant une portion circulaire de transbordement de produits d'une bande à l'autre et étant distants radialement de la largeur des produits ou d'un support des produits augmentée d'un jeu fonctionnel ;
- d'une pièce de guidage fixe dotée de parois latérales prolongeant la rive intérieure dans les directions des bandes transporteuses, les tangentes aux extrémités de la rive extérieure étant également orientées selon ces directions ; et
- des moyens d'entraînement en rotation du disque.

Compte tenu de l'indépendance mécanique du module et des bandes, un tel système permet de travailler avec des bandes d'entrée et de sortie présentant des vitesses de fonctionnement différentes. Ces vitesses peuvent alors être définies et adaptées au besoin de la ligne. La transition entre les bandes se fait via le module de virage de l'invention.

Le dispositif de l'invention permet par ailleurs d'assurer des virages d'angle quelconque tout en maintenant l'orientation des produits par rapport au sens d'avancement.

La sécurité des opérateurs est ensuite assurée sans devoir recourir à des capotages contraignants. Il y a donc possibilité d'implantation de ces modules de virage en dehors des stations de travail ou de manutention sans être assujetti à des précautions particulières.

Enfin, la présente invention autorise l'utilisation de rayons de courbure très réduits, diminuant l'emprise spatiale du système de convoyage.

Selon une possibilité, les moyens d'entraînement du disque consistent en une poulie fixée à un arbre auquel sont solidarisés le disque et la rive intérieure, ladite poulie étant reliée par une courroie à une poulie montée en sortie d'arbre d'un moteur d'entraînement d'une ou des bande(s) transporteuse(s). De préférence, la courroie choisie pourra être à section ronde.

Cette solution permet notamment de changer le plan de transmission du mouvement : dans l'hypothèse où la poulie en sortie d'arbre du moteur est orientée dans un plan vertical, l'utilisation d'une telle courroie permet très simplement de transmettre le mouvement de rotation du moteur à une poulie orientée dans un plan horizontal, en bout d'arbre du disque rotatif. Cette configuration est également très favorable pour faire varier la vitesse du disque. Il suffit à cet effet simplement de changer le diamètre d'une des deux poulies. Sur le plan de la sécurité, il est à noter qu'il est très facile d'arrêter le disque avec la main en cas d'incident par exemple du type coincement, car la courroie, en particulier si elle est lisse et ronde, se met alors à glisser sur la poulie. Un arrêt accidentel de ce type n'entraîne dès lors aucun dégât sur le module de virage de l'invention.

Dans de nombreux cas, les produits ne sont pas directement placés sur les bandes de convoyage, mais sur des palettes véhiculées sur lesdites bandes. Dans cette hypothèse, la distance radiale entre les rives correspond à la largeur de palettes sur lesquelles sont disposés les produits à convoyer augmentée du jeu fonctionnel précité.

Ledit jeu peut être compris entre 0,4 mm et 0,8 mm, et de préférence être de l'ordre de 0,6 mm. Par ailleurs, le rayon de courbure minimal de la rive intérieure peut être prévu de l'ordre de 40 mm, d'où l'emprise spatiale réduite évoquée auparavant.

La solution offerte par l'invention présente une grande souplesse de mise en oeuvre, rendant possible l'existence d'un différentiel de vitesse entre la bande d'entrée et la bande de sortie, ainsi que la mise en place d'orientations relatives quasi quelconques de ces bandes. En particulier, les bandes transporteuses peuvent être orientées parallèlement selon une unique direction, les parois de la pièce de guidage étant alors également parallèles et la rive extérieure dès lors de forme semi-circulaire.

L'association du module de virage de l'invention à des bandes transporteuses classiques, avec un mode d'entraînement du disque tel que décrit auparavant, présente au surplus l'intérêt de ne nécessiter aucun automatisme ni programme. Le fonctionnement de cette solution est complètement synchrone par rapport aux bandes transporteuses, et en particulier par rapport à celle qu'il dessert.

L'invention va à présent être décrite plus en détail, en référence aux figures annexées, pour lesquelles :
- la figure 1 est une vue en perspective d'un module de virage selon l'invention ;
- la figure 2 représente, en vue de dessus, le module présenté à la figure 1 avec les bandes transporteuses d'entrée et de sortie ; et
- la figure 3 montre une coupe médiane dudit module.

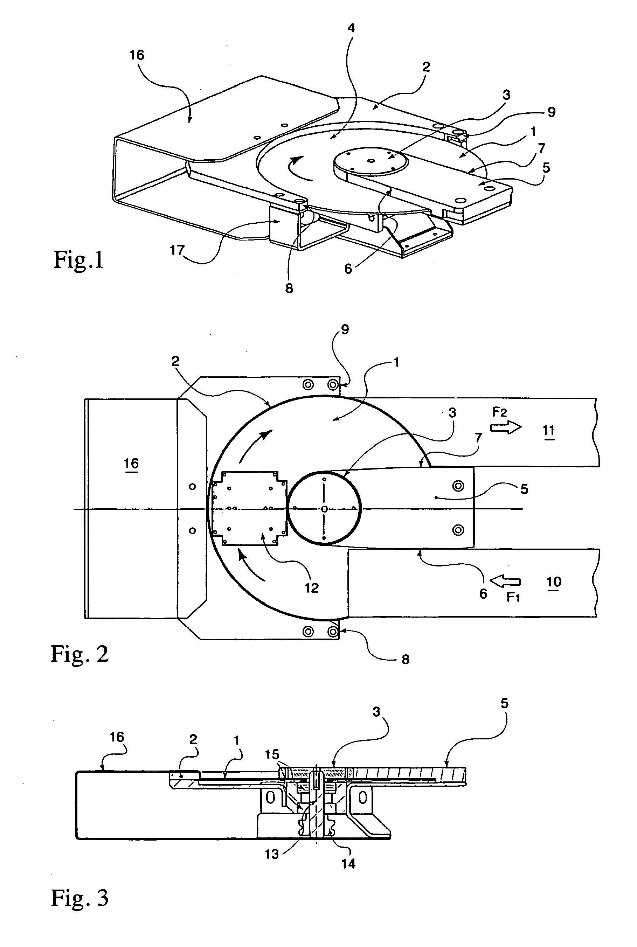

Les différentes figures montrent une configuration de module de virage adapté à des convoyeurs d'entrée et de sortie orientés selon la même direction. Il s'agit d'une configuration dite en hippodrome. Le disque rotatif (1), en association avec une rive externe fixe (2) et une rive interne rotative (3), délimite un chemin circulaire (4) de largeur radiale constante sur lequel transitent les produits à acheminer d'une bande à l'autre (voir en figure 2). Dans l'hypothèse où le sens de rotation du disque rotatif est celui de la flèche, la bande d'entrée serait au premier plan, de manière à surplomber le disque (1), alors que la bande de sortie serait glissée sous ledit disque (1). Une pièce de guidage (5) comportant des parois latérales (6, 7) prolonge la rive intérieure (3) dans la direction des bandes transporteuses d'entrée et de sortie.

Les tangentes au niveau des extrémités libres (8, 9) de la rive fixe (2) sont également orientées dans la direction desdites bandes de convoyage, comme cela apparaît plus clairement en figure 2. La direction desdites bandes est matérialisée, dans cette dernière figure, par les flèches F1 et F2.

En figure 2, les bandes transporteuses sans fin d'entrée (10) et de sortie (11) ont été représentées. Cette figure fait également apparaître une palette (12), sur laquelle est en principe disposé un produit destiné à être convoyé entre les différentes étapes opérationnelles ou de manipulation intervenant dans le circuit. C'est la rive extérieure (2) fixe qui pousse la palette de la première bande (10) sur le disque rotatif (1). En fin de rotation, la pièce de guidage (5), qui est également fixe par rapport au disque, pousse la palette sur la bande de sortie (11). Le rôle de la rive intérieure rotative (3) est d'assurer le bon positionnement de la palette pendant la rotation. Elle permet également d'accumuler si nécessaire des produits sans risque de coincement et sans arrêter le convoyage.

Comme on l'a souligné auparavant, un jeu de fonctionnement est nécessaire pour que le convoyage s'effectue dans de bonnes conditions sur le disque rotatif. Il est par exemple d'environ 0,6 mm.

Le mode d'entraînement du disque rotatif (1) et de la rive intérieure (3) est expliqué en référence à la figure 3. Les éléments rotatifs (disque (1) et rive intérieure (3)) sont fixés à un arbre (13) entraîné en rotation par une poulie (14) dans la gorge de laquelle est placée une courroie, par exemple de section ronde (non représentée). Cette courroie coopère de préférence avec une poulie placée en bout d'arbre de sortie du moteur. Des roulements (15) permettent d'assurer la rotation de l'arbre (13) dans des conditions correctes.

En cas de problème susceptible de générer un effort supérieur à la normale sur le disque rotatif (par exemple lors d'un coincement), la courroie à section ronde glisse dans la gorge de la poulie, sans entraîner aucun dommage pour le système. Dans l'hypothèse où l'on veut changer la vitesse de rotation, il suffit par exemple de changer la poulie (14) et d'en mettre une de diamètre différent.

Les autres parties du module de virage de l'invention apparaissant sur les figures n'ont pas de fonctions essentielles dans ce module. Il en va par exemple ainsi du capot de protection (16) ou de la structure support (17) de la rive extérieure (2), etc. On peut cependant noter que le capotage obtenu à l'aide du capot (16) est minimal, ce que permet la grande sécurité offerte aux opérateurs par le dispositif de l'invention. Celui-ci bénéficie d'une simplicité de conception éminemment favorable, en termes économique, autant pour ce qui concerne les composants que leur assemblage, conduisant à un coût de réalisation réduit.

L'exemple décrit en référence aux figures n'est bien entendu par exhaustif de l'invention, qui englobe également des variantes de formes et de configurations diverses, permettant par exemple de répondre à des changements d'orientation des bandes de convoyage.

## Revendications

1. Module de virage pour convoyeur à bandes transporteuses comportant une bande d'entrée (10) véhiculant des produits selon une première direction et une bande transporteuse de sortie (11) véhiculant lesdits produits selon une seconde direction, **caractérisé en ce qu'**il est constitué :
- d'un disque (1) rotatif glissé sous la bande d'entrée (10) et surplombant la bande de sortie (11), ledit disque (1) étant muni d'une rive extérieure fixe (2) et d'une rive intérieure (3) entraînée à la vitesse de rotation du disque (1), lesdites rives (2, 3) délimitant une portion circulaire (4) de transbordement de produits d'une bande (10) à l'autre (11) et étant distants radialement de la largeur des produits ou d'un support (12) des produits augmentée d'un jeu fonctionnel ;
- d'une pièce de guidage (5) fixe dotée de parois latérales (6, 7) prolongeant la rive intérieure (3) dans les directions des bandes transporteuses (10, 11), les tangentes aux extrémités (8, 9) de la rive extérieure (2) étant également orientées selon ces directions ; et
- des moyens d'entraînement en rotation du disque.

2. Module de virage selon la revendication précédente, **caractérisé en ce que** les moyens d'entraînement du disque (1) consistent en une poulie (14) fixée à un arbre (13) auquel sont solidarisés le disque (1) et la rive intérieure (3), ladite poulie (14) étant reliée par une courroie à une poulie montée en sortie d'arbre d'un moteur d'entraînement d'une ou des bande(s) transporteuse(s) (10, 11).

3. Module de virage selon la revendication précédente, **caractérisé en ce que** la courroie est à section ronde.

4. Module de virage selon l'une des revendications précédentes,
**caractérisé en ce que** la distance radiale entre les rives (2, 3) correspond à la largeur de palettes (12) sur lesquelles sont disposés les produits à convoyer, augmentée d'un jeu fonctionnel.

5. Module de virage selon l'une quelconque des revendications précédentes, **caractérisé en ce que** le jeu fonctionnel est compris entre 0,4 mm et 0,8 mm, et de préférence de l'ordre de 0,6 mm.

6. Module de virage selon l'une quelconque des revendications précédentes, **caractérisé en ce que** le rayon de courbure minimal de la rive intérieure (3) est de l'ordre de 40 mm.

7. Module de virage selon l'une quelconque des revendications précédentes, **caractérisé en ce que** les bandes transporteuses (10, 11) sont orientées selon une unique direction, les parois de la pièce de guidage (5) étant parallèles et la rive extérieure (2) semi-circulaire.

## Claims

1. Turning module for a conveyor with transporter belts comprising an inlet belt (10) conveying products in a first direction and an outlet transporter belt (11) conveying the said products in a second direction, **characterised in that** it is made up of:
- a rotating disc (1) which is slipped under the inlet belt (10) and overhangs the outlet belt (11), the said disc (1) being provided with a fixed outer border (2) and an inner border (3) which is driven at the speed of rotation of the disc (1), the said borders (2, 3) delimiting a circular portion (4) for transferring products from one belt (10) to the other (11) and being radially distant by the width of the products or of a support (12) for the products, plus a working clearance;
- a fixed guide part (5) equipped with side walls (6, 7) that prolong the inner border (3) in the directions of the transporter belts (10, 11), the tangents to the ends (8, 9) of the outer border (2) being likewise oriented in the said directions; and
- means for driving the disc in rotation.

2. Turning module according to the preceding claim, **characterised in that** the means for driving the disc (1) consist in a pulley (14) fixed to a shaft (13) with which the disc (1) and the inner border (3) are interlocked, the said pulley (14) being connected by a belt to a pulley mounted at the shaft outlet of a motor for driving one or both of the transporter belts (10, 11).

3. Turning module according to the preceding claim, **characterised in that** the belt has a round cross-section.

4. Turning module according to one of the preceding claims, **characterised in that** the radial distance between the borders (2, 3) corresponds to the width of pallets (12) on which the products to be conveyed are disposed, plus a working clearance.

5. Turning module according to any of the preceding claims, **characterised in that** the working clearance is between 0.4 mm and 0.8 mm, and preferably of the order of 0.6 mm.

6. Turning module according to any of the preceding claims, **characterised in that** the minimum radius of curvature of the inner border (3) is of the order of 40 mm.

7. Turning module according to any of the preceding claims, **characterised in that** the transporter belts (10, 11) are oriented in a single direction, the walls of the guide part (5) being parallel and the outer border (2) semicircular.

## Patentansprüche

1. Wendemodul für Fördereinrichtung mit Transportbändern, mit einem Eingangsband (10), das Produkte längs einer ersten Richtung befördert, und einem Ausgangstransportband (11), das die Produkte längs einer zweiten Richtung befördert, **dadurch gekennzeichnet, dass** es gebildet ist aus:
- einer rotierenden Scheibe (1), die unter das Eingangsband (10) geschoben ist und über das Ausgangsband (11) übersteht, wobei die Scheibe (1) mit einem festen äußeren Rand (2) und einem mit der Drehgeschwindigkeit der Scheibe (1) angetriebenen inneren Rand (3) versehen ist, wobei die Ränder (2, 3) einen kreisförmigen Abschnitt (4) zum Umladen von Produkten von einem Band (10) zum Anderen (11) begrenzen und radial um die Breite der Produkte oder eines Trägers (12) der Produkte, erhöht um ein funktionales Spiel, beabstandet sind;
- einem festen Führungsteil (5), das mit seitlichen Wänden (6, 7) versehen ist, die den inneren Rand (3) in den Richtungen der Transportbänder (10, 11) verlängern, wobei die Tangenten an die Endpunkte (8, 9) des äußeren Randes (2) ebenfalls längs dieser Richtungen orientiert sind; und
- Mitteln zum rotatorischen Antreiben der Scheibe.

2. Wendemodul nach dem vorhergehenden Anspruch, **dadurch gekennzeichnet, dass** die Scheibenantriebsmittel (1) aus einer Riemenscheibe (14) bestehen, die an einer Welle (13) befestigt ist, mit der die Scheibe (1) und der innere Rand (3) fest verbunden sind, wobei die Riemenscheibe (14) über einen Riemen mit einer Riemenscheibe verbunden ist, die ihrerseits am Ausgang der Welle eines Antriebsmotors eines Transportbandes oder der Transportbänder (10, 11) montiert ist.

3. Wendemodul nach dem vorhergehenden Anspruch, **dadurch gekennzeichnet, dass** der Riemen einen runden Querschnitt hat.

4. Wendemodul nach einem der vorhergehenden Ansprüche, **dadurch gekennzeichnet, dass** der radiale Abstand zwischen den Rändern (2, 3) der Breite von Paletten (12), auf denen die zu befördernden Produkte angeordnet sind, erhöht um ein funktionales Spiel, entspricht.

5. Wendemodul nach einem der vorhergehenden Ansprüche, **dadurch gekennzeichnet, dass** das funktionale Spiel im Bereich von 0,4 mm bis 0,8 mm und vorzugsweise in der Größenordnung von 0,6 mm liegt.

6. Wendemodul nach einem der vorhergehenden Ansprüche, **dadurch gekennzeichnet, dass** der minimale Krümmungsradius des inneren Randes (3) in der Größenordnung von 40 mm liegt.

7. Wendemodul nach einem der vorhergehenden Ansprüche, **dadurch gekennzeichnet, dass** die Transportbänder (10, 11) längs einer einzigen Richtung orientiert sind, wobei die Wände des Führungsteils (5) parallel sind und der äußere Rand (2) halbkreisförmig ist.
